(19) Europäisches Patentamt / European Patent Office / Office européen des brevets

(11) **EP 2 843 937 B1**

(12) **EUROPEAN PATENT SPECIFICATION**

(45) Date of publication and mention
of the grant of the patent:
**09.03.2016 Bulletin 2016/10**

(51) Int Cl.:
***H04N 5/202*** (2006.01)   ***G06T 5/00*** (2006.01)
***B60R 1/00*** (2006.01)   ***H04N 5/235*** (2006.01)

(21) Application number: **14169765.6**

(22) Date of filing: **26.05.2014**

(54) **Method for adapting a gamma curve of a camera system of a motor vehicle, camera system and motor vehicle**

Verfahren zum Anpassen einer Gammakurve eines Kamerasystems eines Kraftfahrzeugs, Kamerasystem und Kraftfahrzeug

Procédé pour adapter la courbe gamma d'un système de caméra d'un véhicule automobile, système de caméra et véhicule à moteur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.07.2013 DE 102013011844**

(43) Date of publication of application:
**04.03.2015 Bulletin 2015/10**

(73) Proprietor: **Connaught Electronics Ltd.**
**Tuam, County Galway (IE)**

(72) Inventor: **Eoghan Denny, Patrick**
**County Galway (IE)**

(74) Representative: **Jauregui Urbahn, Kristian**
**Valeo Schalter und Sensoren GmbH**
**CDA-IP**
**Laiernstraße 12**
**74321 Bietigheim-Bissingen (DE)**

(56) References cited:
WO-A1-2012/172922   US-A1- 2005 180 629
US-A1- 2010 034 458   US-A1- 2011 150 356
US-B2- 7 916 219

**Description**

The invention relates to a method for adapting a gamma curve of a camera system for a motor vehicle. In addition, the invention relates to a computer program product, a camera system as well as a motor vehicle with a camera system.

Camera systems for motor vehicles are already prior art. It is already known to attach a plurality of cameras to a motor vehicle such that the cameras capture the entire environment around the motor vehicle. The provided images can for example be presented on a display in the interior of the motor vehicle. The images can also be taken as a basis for other functionalities, which serve for supporting the driver in driving the motor vehicle. These functionalities can e.g. include the detection of obstacles based on the images.

So-called HDR camera devices ("High Dynamic Range" or "High Dynamic Range Imaging") also belong to the prior art. Such camera devices are able to provide HDR images, which can image the great brightness differences occurring in the environment of the motor vehicle rich in detail. Therein, for providing an HDR image, at least two different exposure values of the camera are usually adjusted. Two images are captured with different exposure values and processed to an HDR image. Alternatively, different exposure values can also be defined for different image regions of the same image. Therein, in particular the exposure time is understood by the term "exposure", with which the pixels of the image sensor are exposed. Alternatively, the term "exposure" can also include the size of an aperture stop.

Presently, the interest is in particular directed to a camera system with at least one camera, which can be a HDR camera or a conventional non-HDR camera. In such a camera system, in which at least one camera is attached to the motor vehicle and provides images of an environmental region of the motor vehicle, the following problems have arisen: the used camera usually has a relatively wide opening angle, which can even be in a range of values from 160° to 200°. Such an opening angle results due to the used lens, as in particular a fish-eye lens. This results in the fact that elements such as vehicle body as well as optionally the number plate of the vehicle are also depicted in the images of the camera, which influence the dynamic behavior of the camera and thus also the image quality or the dynamics of the images. Namely, the cameras are usually designed such that the gain factor of the image sensor and the exposure time are automatically adjusted in the operation of the camera depending on the brightness of the captured scene. For example, if an image is captured in the darkness, in which the illuminated number plate is additionally depicted besides the vehicle environment, thus, the camera detects the light source of the number plate as well as illuminated vehicle areas and thus assumes that the environment is overall bright. Accordingly, the camera will attempt to reduce the gain factor of the image sensor and/or the exposure time. The consequence is that images are presented to the-driver, in which a dark vehicle environment is depicted. Therein, typically, only a preset image region of the captured images is displayed on a display. In analogous manner, the automatic white balance of the camera is also affected. Namely, the depicted vehicle areas increase the average of a color channel of the images. The white balance algorithm then attempts to amplify the other color channels, which overall can result in a color cast in the images.

The same problems also arise in a bright environment, for instance in the daytime. At this time of day, the illumination of the number plate is usually turned off and the depicted vehicle areas are darker than the vehicle environment. In such situations, the camera will assume that the vehicle environment is darker than it is actually the case. The exposure time and/or the gain factor are increased, which overall results in a very bright image and optionally in overexposure.

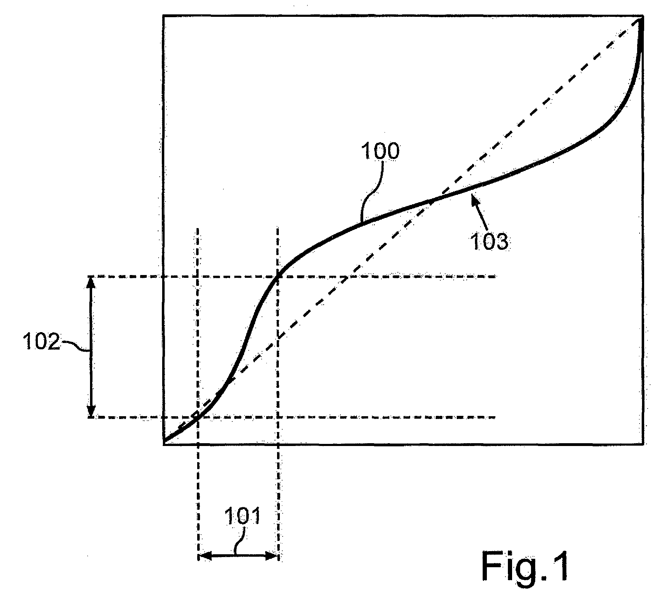

The mentioned problems are in particular also relevant in HDR cameras: in a HDR camera, it is usually sought to increase the contrast of the depicted scene. Typically, therein, the brightness values of the pixels are determined, and the contrast is then increased in the dark image regions. For this purpose, a gamma curve is used, by means of which the image is gamma corrected. An exemplary gamma curve is therein schematically illustrated in Fig. 1 and denoted by 100. A fixed input range of values 101 is defined, which includes relatively small brightness values. The gamma curve 100 is defined such that the numerical range of values and thus the dynamics of these pixels are overall increased. An associated output range of values 102 representing a mathematical mapping of the input range of values 101 according to the gamma curve 100 is thus distinctly greater than the input range of values 101 itself as it is represented in Fig. 1. Thus, the dynamics of the image in this dark region are improved, whereby the dark structures in the image can also be better perceived. However, if such a steep gamma curve 100 is defined for the dark image regions, thus, deterioration of the contrast or of the image dynamics in the other image regions results, which can be identified in Fig. 1 based on a flat section 103 of the gamma curve 100. Now, it can occur that the most important image region, which is displayed on the display or subjected to obstacle recognition, has brightness values, which are outside of the range of values 101. Then, the flat section 103 of the gamma curve 100 is applied to this image region, which overall results in reduction of the contrast of this image region. In comparison, the contrast of the unimportant image regions, in which for example the vehicle parts are depicted, is improved.

Here, a method, as it is described in the document US 2010/0085361 A1, provides a certain remedy. Herein, quasi an AHE method (adaptive histogram equalization) is proposed, in which the gamma correction is specifically applied for different image regions. Here, a disadvantage is in that brightness leaps can optionally occur in the image, which can be perceived by the viewer.

From the printed matter WO 2011/082716 A1, an image generating device for a motor vehicle is known, comprising a first and at least a second camera, which are each formed for image capture of a vehicle environment. From the images of the cameras, a so-called "bird eye view" image is generated, which shows the motor vehicle as well as the environment thereof from a bird's eye view. Therein, the brightness of partial regions of the overall image can be adapted, wherein a gamma curve is determined for adaptation of the brightness.

It is an object of the invention to demonstrate a solution, how in a method of the initially mentioned kind, the gamma curve can be adapted such that the contrast distribution within the image frame is improved compared to the prior art.

This object is solved by a method, by a computer program product, by a camera system as well as by a motor vehicle having the features according to the respective independent claims. Advantageous implementations of the invention are the subject matter of the dependent claims, of the description and of the figures.

A method according to the invention serves for adapting a gamma curve of a camera system of a motor vehicle. An input image of an environmental region of the motor vehicle is provided by an image sensor. The input image is then corrected to an output image based on a current gamma curve. An image processing device determines at least one region of interest in the output image. This region of interest is determined dynamically or in real-time and thus depending on situation by the image processing device. Then, a minimum and a maximum pixel value (in particular brightness value) within the at least one region of interest of the output image are determined, wherein the minimum and the maximum pixel value define a current output range of values. With the aid of a reverse or inverse mapping according to the current gamma curve, then, associated minimum and maximum input pixel values of the input image are calculated from the minimum and maximum pixels of the output image, respectively. The minimum and maximum input pixel values define a preferred input range of values of the gamma curve. Then, a new gamma curve is generated by defining a new output range of values to the preferred input range of values such that the new output range of values is greater than the preferred input range of values. In particular, the new gamma curve can also be generated by steepening the current gamma curve or a fixedly preset curve (for instance a linear curve y=x) within the preferred input range of values, such that a new output range of values greater with respect to the current output range of values is defined to the preferred input range of values. The new gamma curve is then applied as the current gamma curve for at least one subsequent image.

Thus, a gamma curve is provided, which allows improved contrast distribution within the image frame. The numerical range of values and thus the dynamics of the image are improved for those image regions, which are actually interesting to the driver and/or image processing algorithms (such as for example obstacle recognition). In other words, the contrast in the at least one region of interest is improved, which is defined by the image processing device specific to situation and thus depending on the depicted scene. Thus, "priority" is given to the region of interest, while a worse contrast can be accepted for other, less interesting image regions. Thus, improved images can be presented on a display in the motor vehicle on the one hand. The contrast of those image regions, which are interesting to image processing algorithms, such as in particular to obstacle recognition and the like, can be improved on the other hand.

In particular, the camera system includes at least one camera having a mentioned image sensor, which is formed for capturing the input image. Therein, the gamma correction can be preferably performed internally within the image sensor, which can include a corresponding gamma correction device to this. The gamma correction device then receives the digital input image and subjects this input image to gamma correction by means of the current gamma curve. As a result, the output image is then output. This output image is then preferably communicated from the camera to a central control device, which may include the mentioned image processing device for determining the region of interest on the one hand and also a computing device generating the new gamma curve on the other hand. The central control device can then communicate the new gamma curve to the camera, in which the new gamma curve is stored as the current gamma curve.

Therein, the image sensor can be a video sensor providing a sequence of images per second. The image sensor can be a CCD sensor or a CMOS sensor. Overall, the camera can have an optical opening angle, which is larger than 160° and for example is 190°.

Thus, the new gamma curve is made steeper in the preferred input range of values compared to the current gamma curve or to a preset curve by increasing the output range of values or the numerical range of values (image dynamics). This can imply that the new output range of values is defined by a multiplication of the preferred input range of values or alternatively of the current output range of values by a factor of 1.5 to 3.5. The minimum and maximum pixel values of the region of interest of the output image or the minimum and maximum pixel values of the preferred input range of values are thus multiplied by the factor, and thus new minimum and maximum pixel values for the new output range of values are calculated. These new pixel values define the new output range of values. It has turned out that sufficient contrast improvement for the at least one region of interest can be achieved with such a factor of 1.5 to 3.5 without image information in the other image regions being lost.

If the current output range of values is multiplied by the mentioned factor for generating the new output range of values such that the new gamma curve is generated by steepening the current gamma curve within the preferred input range of values, thus, a limit can be defined for the size of the new output range of values, by which the contrast within the region of interest is limited to the top. Thus, a stability of the system can be achieved in case the scene does not alter over a longer time and the preferred input range of values remains constant. Excess steepening of the curve can therefore be prevented. However, if the preferred input range of values is multiplied by the mentioned factor for generating the new output range of values, thus, the problem of stability does not arise.

Preferably, by means of the image sensor, a temporal sequence of input images is provided. The determination of the at least one region of interest as well as the generation of the new gamma curve can then each be newly performed to each one or each nth (with n > 1) input image. This means that the gamma curve is adapted in real time and repeatedly for the respective new regions of interest. Thus, overall, a new gamma curve is generated, which is optimized for the respectively instantaneous scene.

As already explained, the region of interest is determined depending on situation and need-based. For example, a predetermined object can be identified in the output image by means of the image processing device. For this purpose, the output image can be subjected to pattern recognition in order to for example be able to detect pedestrians and/or other vehicles. The region of interest can then be determined depending on the identified object. Therein, for example, the so-called "bounding box" can be used as the region of interest, which is usually output by object recognition algorithms. The region of interest is then for example a rectangular region, which includes the entire detected object. Thus, the important image regions are presented with improved contrast.

However, the shape of the region of interest is not restricted to a rectangle. The region of interest can basically have any shape. For example, several rectangular "bounding boxes" can be combined to a common region of interest.

It can also be provided that several regions of interest separate from each other are determined in the output image and the current output range of values and the preferred input range of values are respectively determined to each region of interest. The new gamma curve can then also be generated in that a new output range of values is respectively defined to each preferred input range of values, which is greater than the associated preferred input range of values, for example by the above mentioned factor of 1.5 to 3.5. Thus, steepening of the gamma curve within the preferred input ranges of values is effected. Thus, a gamma curve is generated, in which several curve sections have a greater steepness, which means that several image regions having different brightnesses are presented with improved contrast with respect to other image regions.

If it is detected that two preferred input ranges of values mutually overlap, thus, these preferred input ranges of values can also be combined to a common preferred input range of values.

The camera system can also have at least two cameras, which each include an image sensor. Then, each camera respectively generates a gamma-corrected output image from an input image. In the output image of each camera, at least one region of interest can be determined by means of the image processing device. Then, the current output range of values and the preferred input range of values are determined to the at least one region of interest of each output image. With respect to the generation of the gamma curve, now, two alternative embodiments are provided:

On the one hand, it can be provided that the new gamma curve is generated commonly for all of the cameras by steepening the gamma curve within the preferred input ranges of values. Therein, a new output range of values is respectively defined to each preferred input range of values, which is greater than the associated preferred input range of values. This means that a global gamma curve is generated for all of the cameras, in which the preferred input ranges of values of all of the cameras are taken into account. This embodiment reduces the computational effort.

On the other hand, it can also be provided that a new gamma curve is respectively generated separately for each camera by steepening the respective gamma curve within the respective preferred input ranges of values. In this embodiment, thus, different gamma curves are provided for the cameras, which are optimized for the respective camera.

From each one predetermined image region of the images of all of the cameras, an overall image can be generated, which is for example a "bird eye view" image. Such an image shows a plan view of the motor vehicle as well as its environment from a bird's eye view. In this context, it can be provided that with each camera the respective region of interest corresponds to that image region, which is used for generating the overall image.

In an embodiment, it is provided that two gamma curves are used for the gamma correction of the input image, which are combined with each other to an overall gamma curve. The overall gamma curve can be generated from the above mentioned gamma curve, which is taken as a basis for the method according to the invention, on the one hand, as well as an additional gamma curve on the other hand. This additional gamma curve is preferably dynamically adapted in the operation of the camera system depending on the entire input image or a preset constant image region. This additional gamma curve is then preferably dependent on the brightness of the current scene, which is depicted in the entire input image or the fixed image region. By providing two separate gamma curves combined to an overall gamma curve, the variation of the image dynamics in the region of interest can be prevented from too much influencing the contrast of the remaining image regions. This is in particular advantageous if the remaining image regions are relatively dark and thus, here too, correspondingly good dynamics are required.

The overall gamma curve is preferably generated based on the following equation:

$$GG = \alpha G1 + (1-\alpha)G2,$$

wherein GG denotes the overall gamma curve, G1 denotes the additional gamma curve and G2 denotes the mentioned gamma curve, to which the method according to the invention is applied. This equation has the advantage that by corresponding selection of the parameter $\alpha$, it can be defined very fast and without much effort, which one of the two gamma curves comes more into effect at the current point of time and thus which one of the two curves has more influence on the entire image.

It has proven advantageous if the parameter $\alpha$ is in a range of values from 0.4 to 0.6, thus in particular in the range around 0.5. Both gamma curves are thus substantially equally highly taken into account and therefore substantially have the same influence on the entire image. Thus, the contrast in the region of interest can be improved on the one hand; on the other hand, the image sensor is still capable of responding very fast to variations of the scene - in particular variations of the brightness of the scene, by correspondingly dynamically adapting the additional gamma curve. However, situations are also possible, in which the parameter $\alpha$ is set to "0" or to "1". If $\alpha=0$, thus, exclusively the gamma curve according to the invention is used; if $\alpha=1$, thus, exclusively the additional gamma curve is used for the gamma correction of the image.

Preferably, brightness values of pixels of the image are used as pixel values. For example, therein, the Y values of the pixels in the YUV color space are used. Thus, the contrast of the image can be optimally adjusted.

However, additionally or alternatively, it can be provided that color values of at least one color channel, in particular of the U channel and/or the V channel, are used as the pixel values. In this manner, a dynamic white balance can be performed, and predetermined effects with respect to the coloring of the image can be achieved. In other words, thus, the color dynamics of the image can be improved in the at least one region of interest.

In addition, the invention relates to a computer program product with a storage medium, on which a computer program is stored, which is adapted to perform a method according to any one of the preceding claims upon execution by a camera system.

A camera system according to the invention is formed for performing a method according to the invention.

A motor vehicle according to the invention includes a camera system according to the invention.

The preferred embodiments presented with respect to the method according to the invention and the advantages thereof correspondingly apply to the computer program product according to the invention, to the camera system according to the invention as well as to the motor vehicle according to the invention.

Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone.

Now, the invention is explained in more detail based on a preferred embodiment as well as with reference to the attached drawings.

There show:

Fig. 1          in schematic illustration a gamma curve for explaining the prior art;

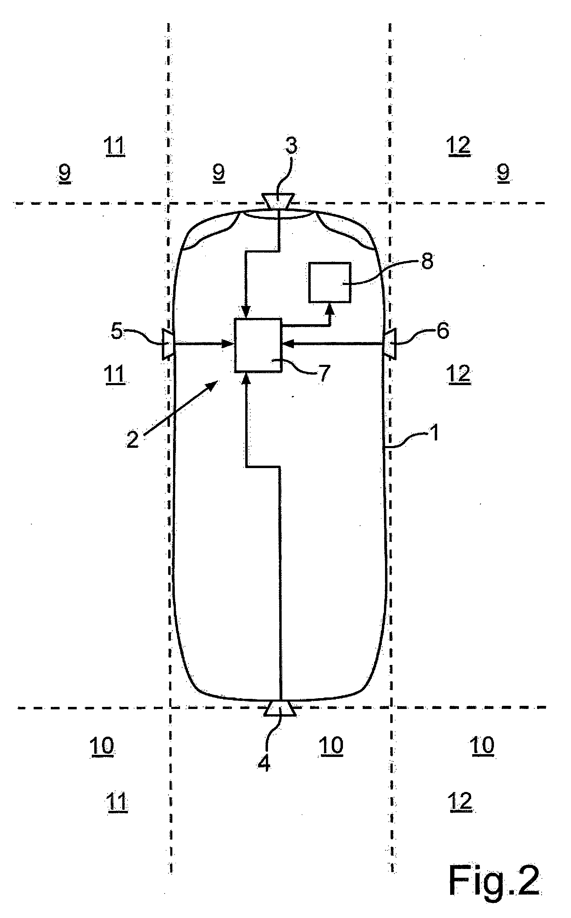

Fig. 2          in schematic illustration a motor vehicle with a camera system according to an embodiment of the invention;

Fig. 3          a block diagram of the camera system;

Fig. 4          in schematic illustration a block diagram of an image sensor of a camera;

Fig. 5          in schematic illustration an exemplary image, in which a predetermined object is identified and a region of interest is determined;

Fig. 6          a flow diagram of a method according to an embodiment of the invention;

Fig. 7 and 8    gamma curves for explaining the method; and

Fig. 9          a flow diagram of a method according to an embodiment of the invention.

A motor vehicle 1 illustrated in Fig. 1 is for example a passenger car. The motor vehicle 1 includes a camera system 2, which has a plurality of cameras 3, 4, 5, 6 in the embodiment, which are disposed distributed on the motor vehicle 1. In the embodiment, four cameras 3, 4, 5, 6 are provided, wherein the invention is also not restricted to such a number and arrangement of the cameras 3, 4, 5, 6. Basically, any number of cameras can be used, which can be disposed at different locations of the motor vehicle 1. Alternatively to such a multi-camera system 2, a camera system 2 with a single camera can also be used.

A first camera 3 is for example disposed on the front bumper of the motor vehicle. A second camera 4 is for example disposed in the rear region, for instance on the rear bumper or on a tailgate. The two lateral cameras 5, 6 can for example be integrated in the respective exterior mirrors. The cameras 3, 4, 5, 6 are electrically coupled to a central control device 7, which in turn is coupled to a display device 8. The display device 8 can be an LCD display.

The cameras 3, 4, 5, 6 are video cameras, which can each capture a sequence of images per time unit and communicate it to the control device 7. The cameras 3, 4, 5, 6 each have a large opening angle, for instance in a range of values from 150° to 200°. They can also be so-called fish-eye cameras. Optionally, the cameras 3, 4, 5, 6 can also be HDR cameras.

The camera 3 captures an environmental region 9 in front of the motor vehicle 1. The camera 4 captures an environmental region 10 behind the motor vehicle 1. The camera 5 captures a lateral environmental region 11 to the left of the motor vehicle 1, while the camera 6 captures an environmental region 12 on the right side of the motor vehicle. The cameras 3, 4, 5, 6 provide images of the respective environmental regions 9, 10, 11, 12 and communicate these images to the control device 7. As is apparent from Fig. 1, the imaged environmental regions 9, 10, 11, 12 mutually overlap in pairs. From the images of the cameras 3, 4, 5, 6, the control device 7 generates an image presentation, which is then displayed on the display device 8.

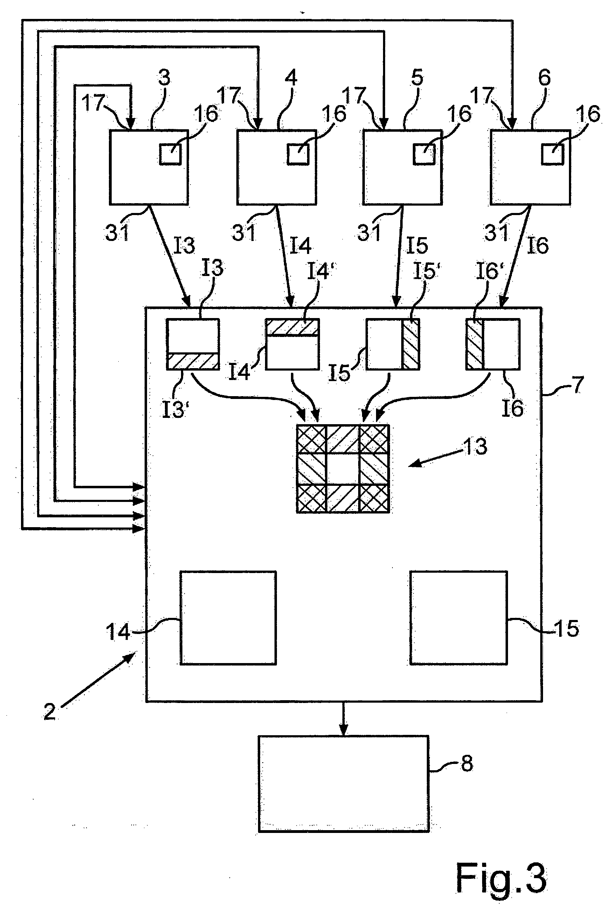

In Fig. 3, in abstract illustration, a block diagram of the camera system 2 is illustrated. The cameras 3, 4, 5, 6 communicate output images 13, 14, 15, 16 to the control device 7. The control device 7 then generates the image presentation 13, which is presented on the display device 8, from respective partial regions I3', I4', I5', I6' of the images I3, I4, I5, I6. This image presentation 13 can for example be a plan view presentation, which shows the motor vehicle 1 and its environment 9, 10, 11, 12 from a bird's eye view. This image presentation 13 is generated from the respective partial regions I3', I4', I5', I6', which show the respective environmental region 9, 10, 11, 12 up to a predetermined distance from the motor vehicle 1 and which are processed together to the image presentation 13. Therein, the image of the motor vehicle 1 itself can be stored in a storage of the control device 7.

Alternatively, the cameras 3, 4, 5, 6 can exclusively communicate the partial regions I3', I4', I5', I6' to the control device 7 such that "cutting out" of the partial regions is performed internally in the cameras 3, 4, 5, 6.

Overall, the invention is not restricted to provision of such an image presentation 13 from a bird's eye view. Basically, any image presentation 13 can be generated from the images I3, I4, I5, I6, which is then presented on the display device 8. As already explained, a single camera can also be provided in the camera system 2.

The processing of the images I3, I4, I5, I6 is performed by means of an image processing device 14 schematically illustrated in Fig. 3. Besides the image processing device 14, the control device 7 also includes a computing device 15. The computing device 15 and the image processing device 14 can also be constituted by a single, common processor.

As already explained, the image presentation 13 can be displayed on the display device 8. However, additionally or alternatively, the images 13, 14, 15, 16 can also be otherwise used and for example be taken as a basis for an image processing algorithm, which for example detects predetermined objects or obstacles in the images 13, 14, 15, 16, which are located in the environment 9, 10, 11, 12 of the motor vehicle 1.

In each camera 3, 4, 5, 6, a gamma curve is respectively stored. It is adapted in the operation of the camera system 2 by the computing device 15, and the respectively current gamma curve is communicated by the control device 7 to the cameras 3, 4, 5, 6. The generation of the gamma curve is described in detail below.

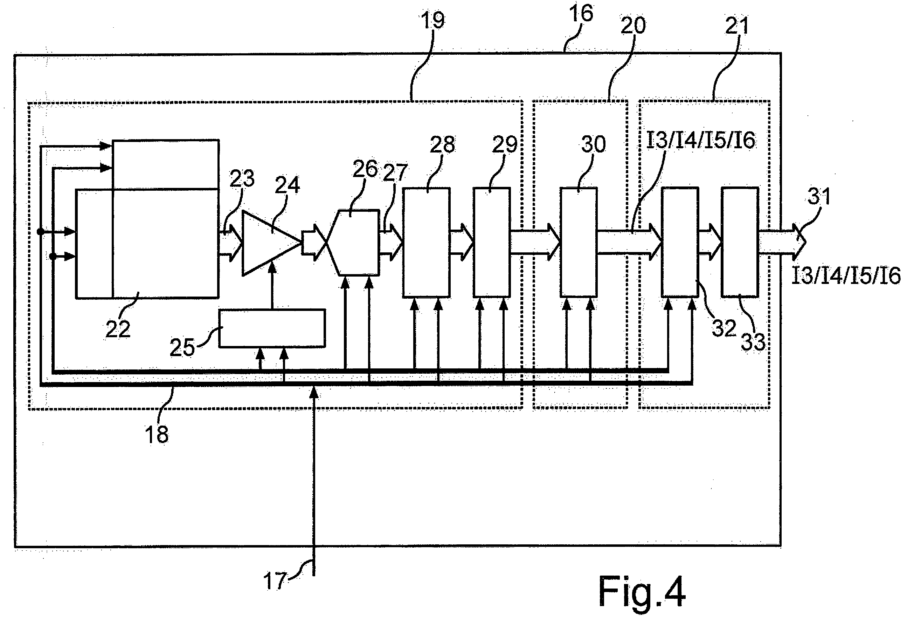

Each camera 3, 4, 5, 6 includes an image sensor 16 as well as optionally further components not illustrated here, such as in particular a lens. The construction of an image sensor 16 is now explained in more detail with reference to Fig. 4.

Therein, for example the image sensor OV10630 or OV10635 of the company Omnivision can be used as the image sensor 16. The image sensor 16 has one or more communication interfaces 17, which are coupled to an internal communication bus 18 of the image sensor 16. Therein, the communication bus 18 extends across a sensor core 19, a processor unit 20 as well as an output interface 21.

The sensor core 19 includes an image array 22 (the actual sensor), by means of which an analog input image 23 is generated. The input image 23 is then amplified by means of an analog amplifier 24, which is controlled by an amplifier control unit 25. The amplified analog input image 23 is then converted to a digital input image 27 by means of an AD converter 26. The digital input image 27 is then subjected to "black level" correction in a block 28 and then digitally amplified in a further block 29. The digital input image 27 is then supplied to the processor unit 20, which has a gamma correction device 30. The gamma correction device 30 subjects the digital input image 27 to gamma correction with the aid of a current gamma curve and outputs a gamma-corrected output image I3/I4/I5/I6, which is then provided at an output 31 via the output interface. Therein, the output interface 21 includes a FIFO block 32 (first in - first out) as well as a DVP block 33 (digital video port).

Presently, the interest pertains to the processor unit 20, namely to the gamma correction device 30, by means of which gamma correction is performed. The gamma correction can overall be performed by means of two different gamma curves, which are combined to an overall gamma curve. The overall gamma curve can be calculated according to the following equation:

$$GG = \alpha G1 + (1-\alpha)G2$$

Therein, GG denotes the overall gamma curve, which is effectively used for the gamma correction of the input image 27. Therein, G2 is a gamma curve, which is generated according to a method according to an embodiment of the invention. In contrast, G1 is an additional gamma curve, which is dynamically varied or adapted in the operation by the gamma correction device 30 or the computing device 15, namely depending on the brightness of the depicted scene of the entire input image 27 or a fixedly preset image region thereof.

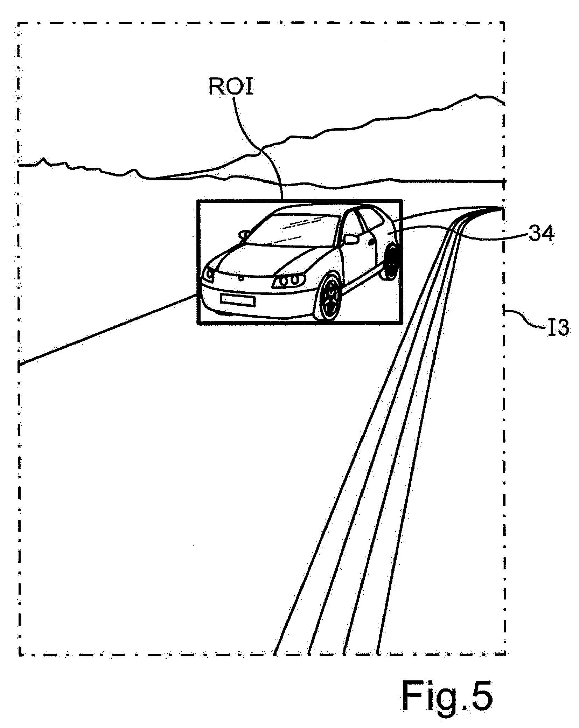

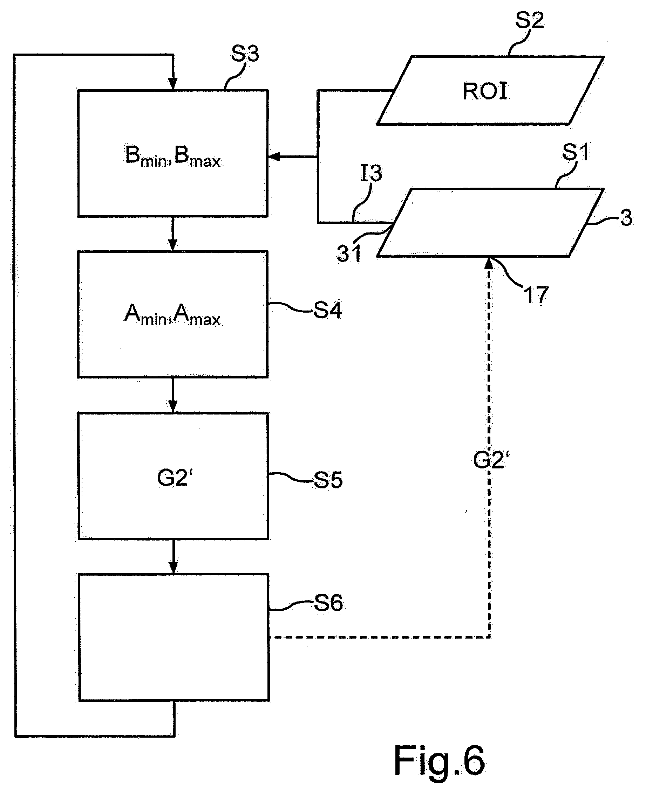

The generation of the gamma curve G2 is now explained in more detail with reference to the flow diagram according to Fig. 6 for a single camera 3: upon activating the camera system 2, it can for example begun with an initial, preset gamma curve G2, such as for example a linear gamma curve with a slope of 1:1. Then, the gamma curve G2 can be newly adapted for each image or for a preset sequence of images. According to a first step S1, the camera 3 outputs an output image 13, which is received by the control device 7. In a second step S2, at least one region of interest ROI is determined individually for the current image 13 by means of the image processing device 14. This can be effected such that an object is identified in the image 13 by means of the image processing device 14. Such an object 34 is exemplarily illustrated in Fig. 5. Therein, Fig. 5 shows an exemplary output image 13 of the camera 3. A so-called "bounding box" is generated to the object 34, which is here formed in the form of another vehicle, which can be used as the ROI. This ROI then surrounds the detected object 34.

Additionally or alternatively, the partial region 13' of the image 13, which is used for generating the image presentation 13, can also be used as the ROI.

With reference again to Fig. 6, the computing device 15 determines a minimum pixel value $B_{min}$ as well as a maximum pixel value $B_{max}$ within the ROI in a further step S3. Preferably, brightness values and thus in particular Y values in the YUV color space are used as pixel values.

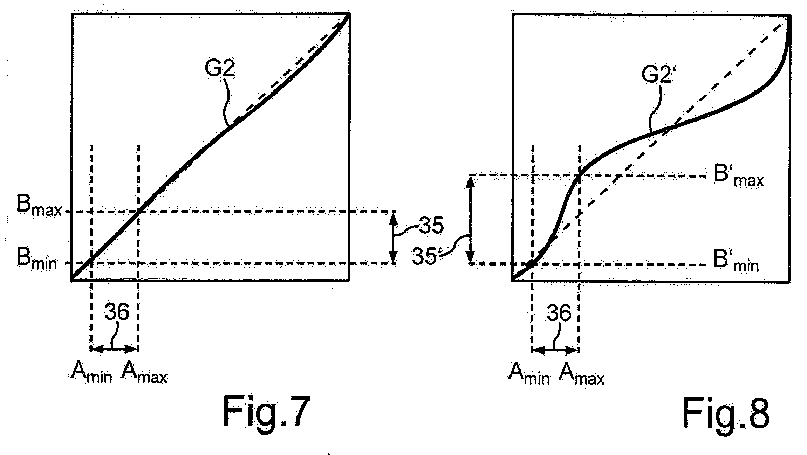

The pixel values $B_{min}$, $B_{max}$ define a current output range of values 35 within the ROI, which is shown in Fig. 7. Therein, Fig. 7 shows a current gamma curve G2 thus instantaneously stored in the gamma correction device 30 and used, which has been used for the gamma correction of the current image 13.

In a further step S4, inverse mapping of the output range of values 35 is effected according to the current gamma curve G2, such that an associated minimum input pixel value $A_{min}$ as well as a maximum input pixel value $A_{max}$ of the input image 27 are calculated from the values $B_{min}$ and $B_{max}$, respectively, using the current gamma curve G2. As is apparent from Fig. 7, the values $A_{min}$, $A_{max}$ define a preferred input range of values 36, within which all of the pixel values of the ROI of the input image 27 are located. Now, in this preferred input range of values 36, the dynamics of the image are to be improved.

With further reference to Fig. 6, in a further step S5, a new gamma curve G2' is generated, which is schematically illustrated in Fig. 8. For generating the new gamma curve G2', the output range of values 35' is increased compared to the output range of values 35 of the current gamma curve G2 within the preferred input range of values 36. In order to achieve this increase, for example, the current output range of values 35 or the preferred input range of values 36 can be multiplied by a factor of 1.5 to 3.5, such that a new output range of values 35' arises, which is greater than the preferred input range of values 36 as well as the current output range of values 35.

In other words, the gamma curve G2' is generated by steepening a gamma reference curve within the preferred input range of values 36. Therein, the current gamma curve G2 is used as the gamma reference curve. However, alternatively, it is also possible to use a fixedly preset curve as the gamma reference curve, such as for example a linear curve with a slope of 1:1. If the current gamma curve G2 is used as the reference gamma curve, thus, optionally, a limit for the slope of the new gamma curve G2' can be defined in order to prevent it from becoming too steep, if the preferred input range of values 36 remains the same over a plurality of images.

With reference again to Fig. 6, the new gamma curve G2' is communicated to the camera 3 in a further step S6, namely via the communication interface 17 to the gamma correction device 30. Then, the method returns to step S3, in which a new image 13 is processed.

This new gamma curve G2' is then used for gamma correction of at least one further input image 27. In this respect, a new gamma curve G2' can be generated respectively for each image or for a preset number of images. Therein, the ROI is each newly determined such that the gamma curves G2 differ from each other and a different preferred input range of values 36 is respectively given.

In the output image 13 of the individual camera 3, several regions of interest ROI can also be determined. Such ROIs can be image regions separate from each other and/or image regions mutually overlapping. Mutually overlapping ROIs can be combined to a common ROI. However, if ROIs separate from each other have been determined, a preferred input range of values 36 can each be determined to each ROI such that $A_{min}$ as well as $A_{max}$ are respectively determined to each ROI. The steepness of the gamma curve G2 can then be increased in each preferred input range of values 36. These input ranges of values 36 can mutually overlap and are then combined to a common preferred input range of values 36.

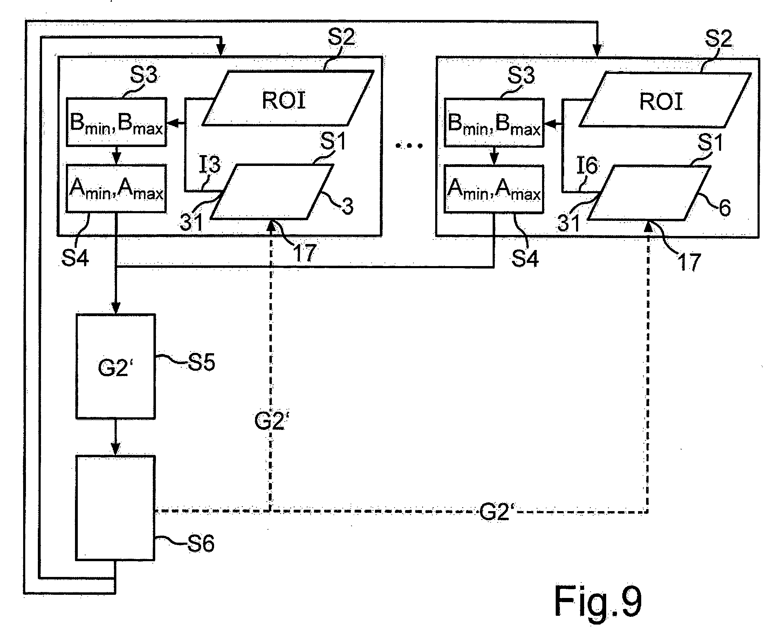

The method according to Fig. 6 can also be performed for all of the cameras 3, 4, 5, 6, as it is shown based on a flow diagram in Fig. 9. Here, the steps S1 to S4 are performed separately for each camera 3, 4, 5, 6 such that at least one ROI is respectively determined to the images 13, 14, 15, 16 of each camera 3, 4, 5, 6. Thus, at least one preferred input range of values 36 is respectively determined to each camera 3, 4, 5, 6, in which the steepness of the gamma curve G2 is increased. Now, two alternative embodiments are provided:

According to step S5 of the method, a separate new gamma curve G2' can respectively be generated for each camera 3, 4, 5, 6, in which the contrast is improved exclusively for the at least one ROI of the respective camera 3, 4, 5, 6, not for the ROIs of the other cameras 3, 4, 5, 6. However, alternatively, a common or global gamma curve G2' can also be generated, which is communicated to all of the cameras 3, 4, 5, 6. In this common gamma curve G2', the contrast is therefore improved for all ROIs of all of the cameras 3, 4, 5, 6, such that the steepness of the gamma curve G2' is increased for preferred input ranges of values 36 of all of the cameras 3, 4, 5, 6.

Upon activating the camera system 2, an initial ROI can be used. If first images are then captured, thus, at least-one ROI is respectively newly determined. For example, the entire image 13, 14, 15, 16 or a preset image region, which is displayed on the display device 8, or ah a priori ROI, which has been previously defined by the image processing device 14, or any combination thereof can be used as the initial ROI.

As explained, Y brightness values of pixels of the image are used as the pixel values. Thus, the contrast of the image can be optimally adjusted. However, it can also be provided that color values of at least one color channel are used as the pixel values and are subjected to color correction by means of a gamma curve. For example, they can be color values of the U channel and/or of the V channel. In this manner, a dynamic white balance can be performed, and predetermined effects with respect to the coloring of the image can be achieved: Thus, the color dynamics of the image can be improved in the at least one ROI.

**Claims**

1. Method for adapting a gamma curve (G2) of a camera system (2) of a motor vehicle (1), including the steps of:

   - providing an input image (27) of an environmental region (9, 10, 11, 12) of the motor vehicle (1) by an image sensor (16) of the camera system (2) and correcting the input image (27) to an output image (13, 14, 15, 16) based on a current gamma curve (G2),
   - determining at least one region of interest (ROI) in the output image (13, 14, 15, 16) by an image processing device (14),
   - determining a minimum and a maximum pixel value ($B_{min}$, $B_{max}$) within the at least one region of interest (ROI) of the output image (13, 14, 15, 16), wherein the minimum and the maximum pixel value ($B_{min}$, $B_{max}$) define a current output range of values (35),
   - inversely calculating associated minimum and maximum input pixel values ($A_{min}$, $A_{max}$) of the input image (27) from the minimum and maximum pixel values ($B_{min}$, $B_{max}$) of the output image (13, 14, 15, 16) using the current gamma curve (G2), wherein the minimum and maximum input pixel values ($A_{min}$, $A_{max}$) define a preferred input range of values (36),
   - generating a new gamma curve (G2') by defining a new output range of values (35') to the preferred input range of values (36), such that the new output range of values (35') is greater than the preferred input range of values (36), and
   - applying the new gamma curve (G2') as current gamma curve (G2) for at least one subsequent input image (27).

2. Method according to claim 1,
   **characterized in that**
   the new output range of values (35') is defined by multiplication of the preferred input range of values (36) or the current output range of values (35) by a factor of 1.5 to 3.5.

3. Method according to claim 1 or 2,
   **characterized in that**
   a temporal sequence of input images (27) is provided by means of the image sensor (16), wherein the determination of the at least one region of interest (ROI) and the generation of the new gamma curve (G2') are each newly performed to each one or each nth input image (27).

4. Method according to any one of the preceding claims,
   **characterized in that**
   by means of the image processing device (14), a predetermined object (34) is identified in the output image (13, 14, 15, 16) and the region of interest (ROI) is determined depending on the identified object (34).

5. Method according to any one of the preceding claims,
   **characterized in that**
   several regions of interest (ROI) separate from each other are determined in the output image (13, 14, 15, 16), and the current output range of values (35) and the preferred input range of values (36) are respectively determined to each region of interest (ROI), wherein the generation of the new gamma curve (G2') includes that a new output range of values (35') is respectively defined to each preferred input range of values (36), which is greater than the associated preferred input range of values (36).

6. Method according to any one of the preceding claims,
   **characterized in that**
   at least two cameras (3, 4, 5, 6) of the motor vehicle (1) each provide a gamma-corrected output image (13, 14, 15, 16), and at least one region of interest (ROI) is respectively determined in each output image (I3, I4, 15, 16) by means of the image processing device (14), wherein the current output range of values (35) and the preferred input range of values (36) are respectively determined to each region of interest (ROI), and wherein the new gamma curve (G2') is generated commonly for all of the cameras (3, 4, 5, 6), by respectively defining a new output range of values (35') to each preferred input range of values (36), which is greater than the associated preferred input range of values (36).

7. Method according to any one of claims 1 to 5,
   **characterized in that**
   at least two cameras (3, 4, 5, 6) of the motor vehicle (1) each provide a gamma-corrected output image (13, 14, 15, 16) and at least one region of interest (ROI) is respectively determined in each output image (13, 14, 15, 16) by means of the image processing device (14), wherein the current output range of values (35) and the preferred input range of values (36) are respectively determined to the at least one region of interest (ROI) of each output image (I3, I4, I5, I6), and wherein a new gamma curve (G2') is respectively generated separately for each camera (3, 4, 5, 6).

8. Method according to any one of the preceding claims,
   **characterized in that**
   for the gamma correction of the input image (27), an overall gamma curve (GG) is used, which is generated from the mentioned gamma curve (G2) on the one hand and from an additional gamma curve (G1) on the other hand, wherein the additional gamma curve (G1) is dynamically adapted depending on the entire input image (27) or a preset constant image region.

9. Method according to claim 8,
   **characterized in that**
   the overall gamma curve (GG) is generated based on the following equation:

$$GG = \alpha G1 + (1-\alpha)G2,$$

wherein GG denotes the overall gamma curve, G1 denotes the additional gamma curve and G2 denotes the mentioned gamma curve.

10. Method according to claim 9,
    **characterized in that**
    $\alpha$ is in a range of values from 0.4 to 0.6.

11. Method according to any one of the preceding claims,
    **characterized in that**
    brightness values of pixels are used as pixel values.

12. Method according to any one of the preceding claims,
    **characterized in that**
    color values of at least one color channel are used as pixel values.

13. Computer program product with a storage medium, on which a computer program is stored, which is adapted to perform a method according to any one of the preceding claims upon execution by a camera system (2).

14. Camera system (2) for a motor vehicle (1), including:

    - an image sensor (16) for providing an input image (27) of an environmental region (9, 10, 11, 12) of the motor vehicle (1),
    - a gamma correction device (30) for correcting the input image (27) to an output image (13, I4, I5, I6) based on a current gamma curve (G2),
    - an image processing device (14) for determining at least one region of interest (ROI) in the output image (13, 14, 15, 16),
    - a computing device (15) for determining a minimum and a maximum pixel value ($B_{min}$, $B_{max}$) within the at least one region of interest (ROI) of the output image (13, 14, 15, 16), wherein the minimum and the maximum pixel value ($B_{min}$, $B_{max}$) define a current output range of values (35), and for calculating associated minimum and maximum input pixel values ($A_{min}$, $A_{max}$) of the input image (27) from the minimum and maximum pixel, values ($B_{min}$, $B_{max}$) of the output image (13, 14, 15, 16) using the current gamma curve (G2), wherein the minimum and maximum input pixel values ($A_{min}$, $A_{max}$) define a preferred input range of values (36),
    - wherein the computing device (15) is adapted to generate a new gamma curve (G2') by defining a new output range of values (35") to the preferred input range of values (36) such that the new output range of values (35') is greater than the preferred input range of values (36), and

- wherein the computing device (15) is adapted to communicate the new gamma curve (G2') as current gamma curve (G2) for at least one subsequent input image (27) to the gamma correction device (30).

15. Motor vehicle (1) including a camera system (2) according to claim 14.

**Patentansprüche**

1. Verfahren zum Anpassen einer Gammakurve (G2) eines Kamerasystems (2) eines Kraftfahrzeugs (1), welches folgende Schritte aufweist:

- Bereitstellen eines Eingangsbildes (27) einer Umgebungsregion (9, 10, 11, 12) des Kraftfahrzeugs (1) durch einen Bildsensor (16) des Kamerasystems (2) und Korrigieren des Eingangsbildes (27) in ein Ausgangsbild (13, 14, 15, 16) auf der Grundlage einer aktuellen Gammakurve (G2),
- Bestimmen mindestens einer Region von Interesse (ROI - *region of interest*) in dem Ausgangsbild (13, 14, 15, 16) durch ein Bildverarbeitungsgerät (14),
- Bestimmen eines minimalen und eines maximalen Pixelwertes ($B_{min}$, $B_{max}$) innerhalb der mindestens einen Region von Interesse (ROI) des Ausgangsbildes (13, 14, 15, 16), wobei der minimale und der maximale Pixelwert ($B_{min}$, $B_{max}$) einen aktuellen Ausgangsbereich von Werten (35) definieren,
- umgekehrtes Berechnen im Zusammenhang stehender minimaler und maximaler Eingangspixelwerte ($A_{min}$, $A_{max}$) des Eingangsbildes (27) aus dem minimalen und maximalen Pixelwert ($B_{min}$, $B_{max}$) des Ausgangsbildes (13, 14, 15, 16) unter Verwendung der aktuellen Gammakurve (G2), wobei der minimale und maximale Eingangspixelwert ($A_{min}$, $A_{max}$) einen bevorzugten Eingangsbereich von Werten (36) definieren,
- Erzeugen einer neuen Gammakurve (G2') durch das Definieren eines neuen Ausgangsbereiches von Werten (35') für den bevorzugten Eingangsbereich von Werten (36), derart, dass der neue Ausgangsbereich von Werten (35') größer ist als der bevorzugte Eingangsbereich von Werten (36), und
- Anwenden der neuen Gammakurve (G2') als die aktuelle Gammakurve (G2) für mindestens ein nachfolgendes Eingangsbild (27).

2. Verfahren nach Anspruch 1, **dadurch gekennzeichnet, dass** der neue Ausgangsbereich von Werten (35') durch Multiplikation des bevorzugten Eingangsbereiches von Werten (36) oder des aktuellen Ausgangsbereiches von Werten (35) mit einem Faktor von 1,5 bis 3,5 definiert wird.

3. Verfahren nach Anspruch 1 oder 2, **dadurch gekennzeichnet, dass** eine zeitliche Abfolge von Eingangsbildern (27) mit Hilfe des Bildsensors (16) bereitgestellt wird, wobei die Bestimmung der mindestens einen Region von Interesse (ROI) und die Erzeugung der neuen Gammakurve (G2') für jedes oder jedes n-te Eingangsbild (27) jeweils neu durchgeführt werden.

4. Verfahren nach einem der vorhergehenden Ansprüche, **dadurch gekennzeichnet, dass** mit Hilfe des Bildverarbeitungsgerätes (14) ein vorbestimmtes Objekt (34) in dem Ausgangsbild (13, 14, 15, 16) identifiziert wird und die Region von Interesse (ROI) in Abhängigkeit von dem identifizierten Objekt (34) bestimmt wird.

5. Verfahren nach einem der vorhergehenden Ansprüche, **dadurch gekennzeichnet, dass** mehrere Regionen von Interesse (ROI), die voneinander getrennt sind, in dem Ausgangsbild (13, 14, 15, 16) bestimmt werden und der aktuelle Ausgangsbereich von Werten (35) und der bevorzugte Eingangsbereich von Werten (36) entsprechend für jede Region von Interesse (ROI) bestimmt werden, wobei die Erzeugung der neuen Gammakurve (G2') aufweist, dass ein neuer Ausgangsbereich von Werten (35') entsprechend für jeden bevorzugten Eingangsbereich von Werten (36) definiert wird, welcher größer ist als der im Zusammenhang stehende bevorzugte Eingangsbereich von Werten (36).

6. Verfahren nach einem der vorhergehenden Ansprüche, **dadurch gekennzeichnet, dass** mindestens zwei Kameras (3, 4, 5, 6) des Kraftfahrzeugs (1) jeweils ein gammakorrigiertes Ausgangsbild (13, 14, 15, 16) bereitstellen und mit Hilfe des Bildverarbeitungsgerätes (14) mindestens eine Region von Interesse (ROI) entsprechend in jedem Ausgangsbild (13, 14, 15, 16) bestimmt wird, wobei der aktuelle Ausgangsbereich von Werten (35) und der bevorzugte Eingangsbereich von Werten (36) entsprechend für jede Region von Interesse (ROI) bestimmt werden und wobei die neue Gammakurve (G2') gemeinsam für sämtliche Kameras (3, 4, 5, 6) erzeugt wird, indem entsprechend ein neuer Ausgangsbereich von Werten (35') für jeden bevorzugten Eingangsbereich von Werten (36) definiert wird, welcher größer ist als der im Zusammenhang stehende bevorzugte Eingangsbereich von Werten (36).

**7.** Verfahren nach einem der Ansprüche 1 bis 5, **dadurch gekennzeichnet, dass** mindestens zwei Kameras (3, 4, 5, 6) des Kraftfahrzeugs (1) jeweils ein gammakorrigiertes Ausgangsbild (13, 14, 15, 16) bereitstellen und mit Hilfe des Bildverarbeitungsgerätes (14) mindestens eine Region von Interesse (ROI) entsprechend in jedem Ausgangsbild (13, 14, 15, 16) bestimmt wird, wobei der aktuelle Ausgangsbereich von Werten (35) und der bevorzugte Eingangsbereich von Werten (36) entsprechend für die mindestens eine Region von Interesse (ROI) von jedem Ausgangsbild (13, 14, 15, 16) bestimmt werden und wobei eine neue Gammakurve (G2') entsprechend getrennt für jede Kamera (3, 4, 5, 6) erzeugt wird.

**8.** Verfahren nach einem der vorhergehenden Ansprüche, **dadurch gekennzeichnet, dass** für die Gammakorrektur des Eingangsbildes (27) eine Gesamtgammakurve (GG) verwendet wird, welche aus der genannten Gammakurve (G2) einerseits und aus einer zusätzlichen Gammakurve (G1) andererseits erzeugt wird, wobei die zusätzliche Gammakurve (G1) in Abhängigkeit von dem gesamten Eingangsbild (27) oder einer voreingestellten konstanten Bildregion dynamisch angepasst wird.

**9.** Verfahren nach Anspruch 8, **dadurch gekennzeichnet, dass** die Gesamtgammakurve (GG) basierend auf der folgenden Gleichung erzeugt wird:

$$GG = \alpha G1 + (1-\alpha)G2,$$

wobei GG die Gesamtgammakurve bezeichnet, G1 die zusätzliche Gammakurve bezeichnet und G2 die genannte Gammakurve bezeichnet.

**10.** Verfahren nach Anspruch 9, **dadurch gekennzeichnet, dass** $\alpha$ in einem Wertebereich von 0,4 bis 0,6 liegt.

**11.** Verfahren nach einem der vorhergehenden Ansprüche, **dadurch gekennzeichnet, dass** Helligkeitswerte von Pixeln als Pixelwerte verwendet werden.

**12.** Verfahren nach einem der vorhergehenden Ansprüche, **dadurch gekennzeichnet, dass** Farbwerte von mindestens einem Farbkanal als Pixelwerte verwendet werden.

**13.** Computerprogrammprodukt mit einem Speichermedium, auf welchem ein Computerprogramm gespeichert ist, welches bei Ausführung durch ein Kamerasystem (2) zum Durchführen eines Verfahrens nach einem der vorhergehenden Ansprüche geeignet ist.

**14.** Kamerasystem (2) für ein Kraftfahrzeug (1), welches Folgendes aufweist:

- einen Bildsensor (16) zum Bereitstellen eines Eingangsbildes (27) einer Umgebungsregion (9, 10, 11, 12) des Kraftfahrzeugs (1),
- ein Gammakorrekturgerät (30) zum Korrigieren des Eingangsbildes (27) in ein Ausgangsbild (13, 14, 15, 16) auf der Grundlage einer aktuellen Gammakurve (G2),
- ein Bildverarbeitungsgerät (14) zum Bestimmen mindestens einer Region von Interesse (ROI) in dem Ausgangsbild (13, 14, 15, 16),
- ein Rechengerät (15) zum Bestimmen eines minimalen und eines maximalen Pixelwertes ($B_{min}$, $B_{max}$) innerhalb der mindestens einen Region von Interesse (ROI) des Ausgangsbildes (13, 14, 15, 16), wobei der minimale und der maximale Pixelwert ($B_{min}$, $B_{max}$) einen aktuellen Ausgangsbereich von Werten (35) definieren, und zum Berechnen im Zusammenhang stehender minimaler und maximaler Eingangspixelwerte ($A_{min}$, $A_{max}$) des Eingangsbildes (27) aus dem minimalen und maximalen Pixelwert ($B_{min}$, $B_{max}$) des Ausgangsbildes (13, 14, 15, 16) unter Verwendung der aktuellen Gammakurve (G2), wobei der minimale und maximale Eingangspixelwert ($A_{min}$, $A_{max}$) einen bevorzugten Eingangsbereich von Werten (36) definieren,
- wobei das Rechengerät (15) zum Erzeugen einer neuen Gammakurve (G2') durch das Definieren eines neuen Ausgangsbereiches von Werten (35') für den bevorzugten Eingangsbereich von Werten (36) geeignet ist, derart, dass der neue Ausgangsbereich von Werten (35') größer ist als der bevorzugte Eingangsbereich von Werten (36), und
- wobei das Rechengerät (15) zum Kommunizieren der neuen Gammakurve (G2') als die aktuelle Gammakurve (G2) für mindestens ein nachfolgendes Eingangsbild (27) an das Gammakorrekturgerät (30) geeignet ist.

**15.** Kraftfahrzeug (1), welches ein Kamerasystem (2) nach Anspruch 14 aufweist.

**Revendications**

**1.** Procédé d'adaptation d'une courbe gamma (G2) d'un système de caméras (2) d'un véhicule à moteur (1), comportant les étapes consistant à :

- obtenir une image d'entrée (27) d'une région environnementale (9, 10, 11, 12) du véhicule à moteur (1) avec un capteur d'image (16) du système de caméras (2) et corriger l'image d'entrée (27) en une image de sortie (13, 14, 15, 16) sur la base d'une courbe gamma courante (G2),
- déterminer au moins une région d'intérêt (ROI) dans l'image de sortie (13, 14, 15, 16) avec un dispositif de traitement d'image (14),
- déterminer des valeurs de pixel minimale et maximale ($B_{min}$, $B_{max}$) à l'intérieur de l'au moins une région d'intérêt (ROI) de l'image de sortie (13, 14, 15, 16), les valeurs de pixel minimale et maximale ($B_{min}$, $B_{max}$) définissant une gamme de sortie courante de valeurs (35),
- calculer de façon inverse des valeurs de pixel d'entrée minimale et maximale ($A_{min}$, $A_{max}$) de l'image d'entrée (27) à partir des valeurs de pixel minimale et maximale ($B_{min}$, $B_{max}$) de l'image de sortie (13, 14, 15, 16) en utilisant la courbe gamma courante (G2), les valeurs de pixel d'entrée minimale et maximale ($A_{min}$, $A_{max}$) définissant une gamme d'entrée préférée de valeurs (36),
- générer une nouvelle courbe gamma (G2') en définissant une nouvelle gamme de sortie de valeurs (35') par rapport à la gamme d'entrée préférée de valeurs (36), de telle sorte que la nouvelle gamme de sortie de valeurs (35') soit supérieure à la gamme d'entrée préférée de valeurs (36), et
- appliquer la nouvelle courbe gamma (G2') en tant que courbe gamma courante (G2) pour au moins une image d'entrée consécutive (27).

2. Procédé selon la revendication 1,
**caractérisé en ce que**
la nouvelle gamme de sortie de valeurs (35') est définie par multiplication de la gamme d'entrée préférée de valeurs (36) ou de la gamme de sortie courante de valeurs (35) par un facteur de 1,5 à 3,5.

3. Procédé selon la revendication 1 ou 2,
**caractérisé en ce que**
une séquence temporelle d'images d'entrée (27) est obtenue au moyen du capteur d'image (16), la détermination de l'au moins une région d'intérêt (ROI) et la production de la nouvelle courbe gamma (G2') étant chacune de nouveau effectuées pour chaque ou chaque énième image d'entrée (27).

4. Procédé selon l'une quelconque des revendications précédentes,
**caractérisé en ce que**
au moyen du dispositif de traitement d'image (14), un objet prédéterminé (34) est identifié dans l'image de sortie (13, 14, 15, 16) et la région d'intérêt (ROI) est déterminée en fonction de l'objet identifié (34).

5. Procédé selon l'une quelconque des revendications précédentes,
**caractérisé en ce que**

plusieurs régions d'intérêt (ROI) séparées les unes des autres sont déterminées dans l'image de sortie (13, 14, 15, 16), et la gamme de sortie courante de valeurs (35) et la gamme d'entrée préférée de valeurs (36) sont respectivement déterminées par rapport à chaque région d'intérêt (ROI), la production de la nouvelle courbe gamma (G2') impliquant qu'une nouvelle gamme de sortie de valeurs (35') est respectivement définie par rapport à chaque gamme d'entrée préférée de valeurs (36), laquelle est supérieure à la gamme d'entrée préférée associée de valeurs (36).

6. Procédé selon l'une quelconque des revendications précédentes,
**caractérisé en ce que**
au moins deux caméras (3, 4, 5, 6) du véhicule à moteur (1) fournissent chacune une image de sortie corrigée en gamma (13, 14, 15, 16), et au moins une région d'intérêt (ROI) est respectivement déterminée dans chaque image de sortie (13, 14, 15, 16) au moyen du dispositif de traitement d'image (14), la gamme de sortie courante de valeurs (35) et la gamme d'entrée préférée de valeurs (36) étant respectivement déterminées par rapport à chaque région d'intérêt (ROI), et la nouvelle courbe gamma (G2') étant générée de façon commune pour toutes les caméras (3, 4, 5, 6), en définissant respectivement une nouvelle gamme de sortie de valeurs (35') par rapport à chaque gamme d'entrée préférée de valeurs (36), laquelle est supérieure à la gamme d'entrée préférée associée de valeurs (36).

7. Procédé selon l'une quelconque des revendications 1 à 5,
**caractérisé en ce que**
au moins deux caméras (3, 4, 5, 6) du véhicule à moteur (1) fournissent chacune une image de sortie corrigée en gamma (13, 14, 15, 16) et au moins une région d'intérêt (ROI) est respectivement déterminée dans chaque image de sortie (13, 14, 15, 16) au moyen du dispositif de traitement d'image (14), la gamme de sortie courante de valeurs (35) et la gamme d'entrée préférée de valeurs (36) étant respectivement déterminées par rapport à l'au moins une région d'intérêt (ROI) de chaque image de sortie (13, 14, 15, 16), et une nouvelle courbe gamma (G2') étant respectivement générée séparément pour chaque caméra (3, 4, 5, 6) .

8. Procédé selon l'une quelconque des revendications précédentes,
**caractérisé en ce que**
pour la correction gamma de l'image d'entrée (27), une courbe gamma globale (GG) est utilisée, laquelle est générée à partir de la courbe gamma mentionnée (G2) d'une part et d'une courbe gamma supplémentaire (G1) d'autre part, la courbe gamma supplémentaire (G1) étant adaptée dynamiquement en fonction de l'image d'entrée entière (27) ou d'une région constante prédéfinie de l'image.

9. Procédé selon la revendication 8, **caractérisé en ce que** la courbe gamma globale (GG) est générée sur la base de l'équation suivante :

$$GG = \alpha G1 + (1-\alpha) G2,$$

dans laquelle GG désigne la courbe gamma globale, G1 désigne la courbe gamma supplémentaire et G2 désigne la courbe gamma mentionnée.

10. Procédé selon la revendication 9, **caractérisé en ce que** $\alpha$ se situe dans une gamme de valeurs de 0,4 à 0,6.

11. Procédé selon l'une quelconque des revendications précédentes, **caractérisé en ce que** des valeurs de luminosité de pixels sont utilisées comme valeurs de pixel.

12. Procédé selon l'une quelconque des revendications précédentes, **caractérisé en ce que** des valeurs de couleur d'au moins un canal de couleur sont utilisées comme valeurs de pixel.

13. Produit-programme informatique avec un support de stockage, sur lequel est stocké un programme informatique, qui est adapté pour effectuer un procédé selon l'une quelconque des revendications précédentes lorsqu'il est exécuté par un système de caméras (2).

14. Système de caméras (2) pour un véhicule à moteur (1), comportant :

- un capteur d'image (16) pour obtenir une image d'entrée (27) d'une région environnementale (9, 10, 11, 12) du véhicule à moteur (1),
- un dispositif de correction gamma (30) pour corriger l'image d'entrée (27) en une image de sortie (13, 14, 15, 16) sur la base d'une courbe gamma courante (G2),
- un dispositif de traitement d'image (14) pour déterminer au moins une région d'intérêt (ROI) dans l'image de sortie (13, 14, 15, 16),
- un dispositif de calcul (15) pour déterminer des valeurs de pixel minimale et maximale ($B_{min}$, $B_{max}$) à l'intérieur de l'au moins une région d'intérêt (ROI) de l'image de sortie (13, 14, 15, 16), les valeurs de pixel minimale et maximale ($B_{min}$,

$B_{max}$) définissant une gamme de sortie courante de valeurs (35), et pour calculer des valeurs de pixel d'entrée minimale et maximale associées ($A_{min}$, $A_{max}$) de l'image d'entrée (27) à partir des valeurs de pixel minimale et maximale ($B_{min}$, $B_{max}$) de l'image de sortie (13, 14, 15, 16) en utilisant la courbe gamma courante (G2), les valeurs de pixel d'entrée minimale et maximale ($A_{min}$, $A_{max}$) définissant une gamme d'entrée préférée de valeurs (36),
- le dispositif de calcul (15) étant adapté pour générer une nouvelle courbe gamma (G2') en définissant une nouvelle gamme de sortie de valeurs (35') par rapport à la gamme d'entrée préférée de valeurs (36) de telle sorte que la nouvelle gamme de sortie de valeurs (35') est supérieure à la gamme d'entrée préférée de valeurs (36), et
- le dispositif de calcul (15) étant adapté pour communiquer la nouvelle courbe gamma (G2') en tant que courbe gamma courante (G2) pour au moins une image d'entrée consécutive (27) du dispositif de correction gamma (30).

15. Véhicule à moteur (1) comportant un système de caméras (2) selon la revendication 14.

Fig.1

Fig.2

Fig.3

Fig.4

Fig.5

Fig.6

Fig.7

Fig.8

Fig.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100085361 A1
- WO 2011082716 A1